# EUROPÄISCHE PATENTSCHRIFT

(11) **EP 1 160 464 B1**
(45) Veröffentlichungstag und Bekanntmachung des Hinweises auf die Patenterteilung: **08.03.2006**
(21) Anmeldenummer: 01110901.4
(22) Anmeldetag: 05.05.2001
(51) Int. Cl.: F16B 13/12

(54) **Spreizanker zur Befestigung an einer Baustoffplatte**
Expanding anchor to be fastened to a building panel
Boulon d'ancrage expansible pour la fixation à un panneau de construction

(30) Priorität: 02.06.2000 DE 10027440
(43) Veröffentlichungstag der Anmeldung: 05.12.2001
(73) Patentinhaber: fischerwerke Artur Fischer GmbH & Co. KG, 72178 Waldachtal (DE)
(72) Erfinder: Frischmann, Albert, 79341 Kenzingen (DE); Schnabl, Rudolf, 79336 Herbolzheim (DE); Schwaab, Frank, 79350 Sexau (DE)

(56) Entgegenhaltungen:
- EP-A- 0 889 250
- FR-A- 2 708 057
- GB-A- 258 892
- GB-A- 2 042 885

## Beschreibung

Die Erfindung betrifft einen Spreizanker zur Befestigung an einer Baustoffplatte mit den Merkmalen des Oberbegriffs des Anspruchs 1. Der Spreizanker eignet sich ebenfalls zur Befestigung beispielsweise an einer Wand eines Hohlblocksteins oder in einem weichen Baustoff wie beispielsweise Gasbeton.

Aus der GB-A-2 042 885 ist eine Laufrollen-Befestigungshülse bekannt, die einstückig durch Stanzen und Biegen aus Blech hergestellt ist. Die bekannte Befestigungshülse weist zwei halbzylinderförmige Schenkel auf, die sich zu einem Rohr ergänzen. An einem freien Ende verjüngen sich die Schenkel konisch. Am anderen Ende sind die Schenkel einstückig über einen lochscheibenförmigen Flansch verbunden, von dem sie rechtwinklig abstehend gebogen sind. Die Befestigungshülse ist in eine Bohrung in einem Holzboden eines Rollmöbels steckbar und es ist ein Schaft einer Laufrolle in die Befestigungshülse steckbar, wobei ein Kopf des Schafts durch die Befestigungshülse durchtritt und diese nach Art einer Schnappverbindung hintergreift, so dass die Laufrolle nicht aus der Befestigungshülse herausfällt.

Der Erfindung liegt die Aufgabe zugrunde, einen einstückig durch Stanzen und Biegen aus Blech herstellbaren Spreizanker vorzuschlagen.

Diese Aufgabe wird erfindungsgemäß durch die Merkmale des Anspruchs 1 gelöst. Der erfindungsgemäße Spreizanker ist durch Trennen und Umformen aus Blech hergestellt. Er weist flächenförmige Spreizelemente auf, die in etwa am Umfang eines gedachten Zylinders angeordnet sind. Die Spreizelemente stehen in etwa rechtwinklig und zur gleichen Seite von einer Grundplatte des Spreizankers ab, die ein Loch zum Durchstecken einer Spreizschraube aufweist. Des Weiteren weist der erfindungsgemäße Spreizanker einen Spreizkörper auf, der zwischen die Spreizelemente einziehbar ist und diese dadurch auseinander drückt, d. h. aufspreizt. Der Spreizkörper kann beispielsweise als Spreizkonus, Spreizkegel oder Spreizkeil ausgebildet sein.

Des weiteren weist der erfindungsgemäße Spreizanker eine Rasteinrichtung auf, die den Spreizkörper in einer zwischen die Spreizelemente eingezogenen Stellung verrastet am Spreizanker hält. Dies hat den Vorteil, dass die Spreizschraube nach dem Aufspreizen des Spreizankers aus dem Spreizanker herausgedreht werden kann, ohne dass der Spreizkörper aus dem Spreizanker herausfallen kann. Auch nach Ausdrehen der Schraube hält die Rasteinrichtung den Spreizkörper zwischen den Spreizelementen und der Spreizkörper hält die Spreizelemente aufgespreizt, so dass der Spreizanker auch ohne die Spreizschraube in der Baustoffplatte verankert bleibt. Auch bei einem erneuten Eindrehen der Spreizschraube besteht nicht die Gefahr, dass durch einen axialen Druck auf den Spreizkörper beim Ansetzen der Spreizschraube der Spreizkörper aus den Spreizelementen herausgedrückt wird und verloren geht.

Außerdem hat der erfindungsgemäße Spreizanker den Vorteil, dass er preisgünstig aus Blech herstellbar und einfach in einem Bohrloch in einer Baustoffplatte verankerbar ist. Weiterer Vorteil der Erfindung ist, dass sich der Spreizköper beim Einziehen zwischen die Spreizzungen bis in Anlage an die Grundplatte ziehen lässt. Der Spreizköper stützt sich dann auf einer Seite der Grundplatte ab, so dass die Beendigung des Aufspreizvorgangs des Spreizankers durch ein sprungartig ansteigendes Drehmoment merk- und feststellbar ist. Zudem erlaubt die Anlage des Spreizkörpers an der Grundplatte ein Festziehen einer in den Spreizkörper eingedrehten Spreizschraube mit hohem Drehmoment.

Die Rasteinrichtung kann bei einer Ausgestaltung der Erfindung an den Spreizelementen ausgebildete Rastelemente aufweisen, mit denen der Spreizkörper in der zwischen die Spreizelemente eingezogenen Stellung verrastet. Die Rastelemente können beispielsweise als Ausstanzungen an den Spreizelementen ausgebildet sein. Diese Ausbildung der Erfindung ermöglicht eine kostenneutrale Herstellung der Rasteinrichtung durch Stanzen oder ein sonstiges Trennverfahren des Spreizankers aus Blech.

Zur Anpassung an eine Krümmung einer Bohrlochwandung sind die flächenförmigen Spreizelemente des Spreizankers bei einer Ausgestaltung der Erfindung in Umfangsrichtung gekrümmt.

Bei einer bevorzugten Ausgestaltung der Erfindung weisen die Spreizelemente eine Längsprofilierung, insbesondere eine Wellung auf. Die Längsprofilierung drückt sich beim Aufspreizen der Spreizelemente in eine Bohrlochwandung ein und vermeidet dadurch ein Mitdrehen des Spreizankers beim Eindrehen einer Spreizschraube in den Spreizkörper zum Aufspreizen des Spreizankers. Weiterer Vorteil der Längsprofilierung ist eine erhöhte Biegesteifigkeit der Spreizelemente in Längsrichtung.

In bevorzugter Ausgestaltung der Erfindung steht die Grundplatte zumindest stellenweise seitlich über die Spreizelemente über. Die Grundplatte begrenzt dadurch eine Einstecktiefe des Spreizankers in ein Bohrloch in der Baustoffplatte und verhindert ein zu tiefes Einstecken des Spreizankers in das Bohrloch oder ein Durchdrücken des Spreizankers durch das Bohrloch hindurch. In letzterem Fall würde der Spreizanker auf der Rückseite der Baustoffplatte herunterfallen und wäre verloren.

Bei einer Ausgestaltung der Erfindung weist der Spreizkörper einen Spreizkonus und einen zylindrischen Abschnitt an einem durchmesserkleineren und der Grundplatte zugewandten Ende des Spreizkonus auf. Der zylindrische Abschnitt des Spreizkörpers führt den Spreizkörper beim Einziehen zwischen die Spreizelemente. Des Weiteren ermöglich der zylindrische Abschnitt ein Klemmen des Spreizkörpers zwischen den Spreizelementen vor dem Aufspreizen. Der Spreizkörper ist dadurch bis zum Aufspreizen unabhängig von einer eingedrehten Spreizschraube klemmend am Spreizanker gehalten.

Die Erfindung wird nachfolgend anhand eines in der Zeichnung dargestellten Ausführungsbeispiels näher erläutert. Es zeigen:
- Figur 1: ein Blechstanzteil zur Herstellung eines erfindungsgemäßen Spreizankers;
- Figur 2: eine Stimansicht eines aus dem Blechstanzteil aus Figur 1 hergestellten, erfindungsgemäßen Spreizankers in einer Stirnansicht gemäß Pfeil II in Figur 3 ohne Spreizkörper;
- Figur 3: den Spreizanker aus Figur 2 in Seitenansicht in einer Explosionsdarstellung; und
- Figur 4: den Spreizanker aus Figuren 2 und 3 in aufgespreiztern Zustand.

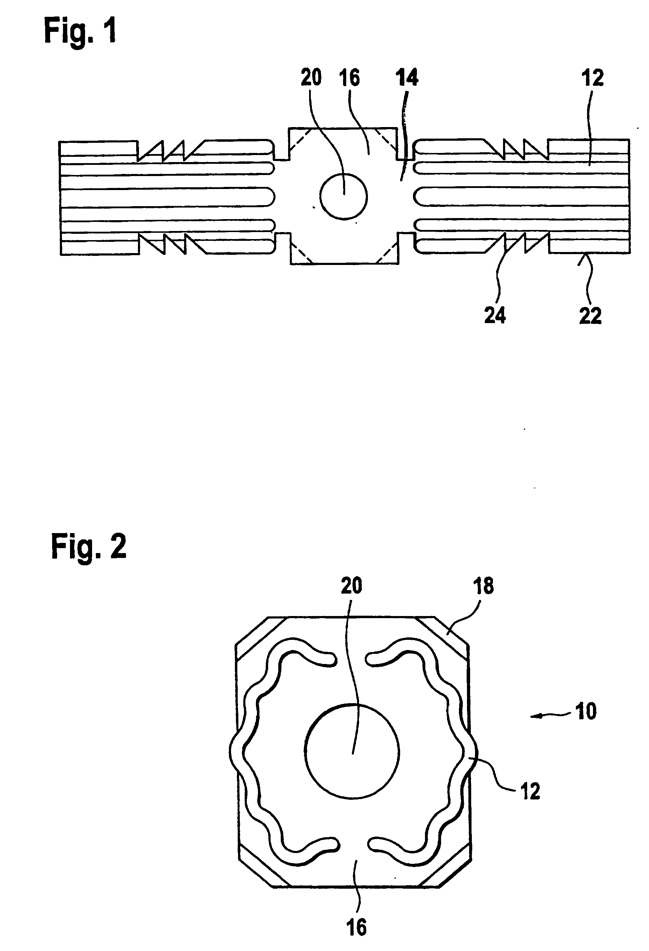

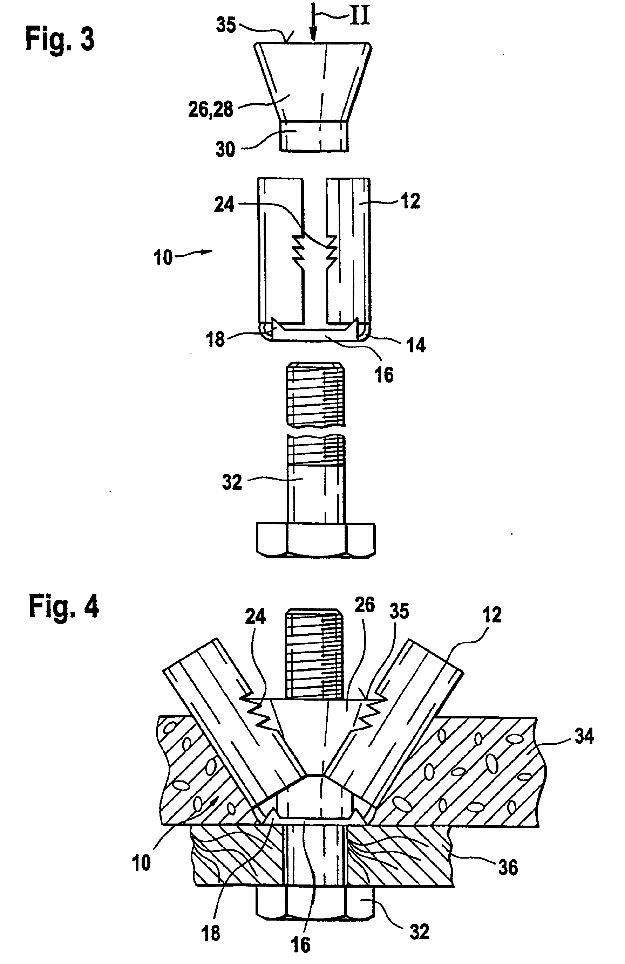

Der in Figuren 2 und 3 dargestellte, erfindungsgemäße Spreizanker 10 weist zwei flächenförmige Spreizelemente 12 auf, die an einem Stimende über Biegelaschen 14 einstückig mit einer Grundplatte 16 verbunden sind. Die Spreizelemente 12 sind rechtwinklig zu einer Seite von der Grundplatte 16 abstehend umgebogen. Wie in Figur 2 zu sehen, weisen die Spreizelemente 12 in etwa die Form zweier Halbzylinderschalen auf, d. h. sie sind in Umfangsrichtung gekrümmt. Zusätzlich sind die Spreizelemente 12 mit einer Längsprofilierung in Form einer in Längsrichtung verlaufenden Wellung versehen. Der Spreizkörper 26 ist in Figur 2 nicht dargestellt um die Krümmung der Spreizelemente 12 in Umfangsrichtung und ihre Wellung erkennen zu können. Vier Ecken der Grundplatte 16 sind in derselben Richtung wie die Spreizelemente 12 gegenüber der Grundplatte 16 abgewickelt. Die vier Ecken bilden Krallen 18. In ihrer Mitte ist die Grundplatte 16 mit einem Loch 20 versehen. Wie in Figur 2 erkennbar, steht die Grundplatte 16 an zwei Seiten seitlich über die Spreizelemente 12 über.

Die Grundplatte 16 mit den Spreizelementen 12 ist durch Stanzen und Umformen, beispielsweise Tiefziehen, aus einem Blech hergestellt, wie es in Figur 1 dargestellt ist. Die beiden über die Biegelaschen 14 einstückig mit der Grundplatte 16 verbundenen Spreizelemente stehen zunächst in entgegengesetzten Richtungen von der Grundplatte 16 ab, bis sie an den Biegelaschen 14 rechtwinkelig umgebogen werden.

Längsseitenränder 22 der Spreizelemente 12 sind mit einer sägezahnförmigen Ausstanzung versehen, die Rastelemente 24 bildet.

Zum Aufspreizen der Spreizelemente 12 weist der erfindungsgemäße Spreizanker 10 einen Spreizkörper 26 auf, der mit einem in der Zeichnung nicht sichtbaren durchgehenden Innengewinde versehen ist. Der Spreizkörper 26 weist einen Spreizkonus 28 und einen mit dem Spreizkonus 28 einstückigen, zylindrischen Abschnitt 30 auf. Der zylindrische Abschnitt 30 ist auf einer der Grundplatte 16 zugewandten Seite mit kleinerem Durchmesser des Spreizkonus 28 angeordnet. Zum Einziehen des Spreizkörpers 26 zwischen die Spreizelemente 12 ist eine Spreizschraube 32 vorgesehen.

Die Funktion des erfindungsgemäßen Spreizankers 10 ist folgende: Es wird zunächst der Spreizkörper 26 mit seinem zylindrischen Abschnitt 30 zwischen der Grundplatte 16 ferne Enden der Spreizelemente 12 gesteckt. Ein Durchmesser des zylindrischen Abschnitts 30 des Spreizkörpers 26 ist so auf die Spreizelemente 12 abgestimmt, dass der Spreizkörper 26 durch Klemmung hält. Anschließend wird die Spreizschraube 32 durch das Mittelloch 20 der Grundplatte 16 durchgesteckt und lose in das in der Zeichnung nicht sichtbare Innengewinde des Spreizkörpers 26 eingeschraubt. Der Spreizanker 10 ist nun verwendungsfertig.

Der verwendungsfertige Spreizanker 10 wird mit dem Spreizkörper 26 voran in ein Bohrloch in einer Baustoffplatte, beispielsweise der in Figur 4 dargestellte Gipskartonplatte 34 gesteckt, bis die seitlich über die Spreizelemente 12 überstehende Grundplatte 16 des Spreizankers 10 an der Gipskartonplatte 34 anliegt. Die Krallen 18 an der Grundplatte 16 drücken sich in die Gipskartonplatte 34 ein. Beim Stecken des Spreizankers 10 in das Bohrloch in der Gipskartonplatte 34 formt sich die Wellung der Spreizelemente 12 in eine Bohrlochwandung ein und vermeidet dadurch ebenso wie die Krallen 18 ein Mitdrehen des Spreizankers 10 beim Anziehen der Spreizschraube 32.

Die Spreizschraube 32 wird in einer Eindrehrichtung gedreht und zieht dadurch den Spreizkörper 26 zwischen die beiden Spreizelemente 12 ein. Beim Einziehen zwischen die Spreizelemente 12 drückt der Spreizkörper 26 die beiden Spreizelemente 12 wie in Figur 4 zu sehen V-förmig schräg auseinander, d. h. der Spreizkörper 26 spreizt die Spreizelemente 12 auf. Die aufgespreizten Spreizelemente 12 hintergreifen die Gipskartonplatte 34 und verankern dadurch den Spreizanker 10 formschlüssig an der Gipskartonplatte 34.

Der Spreizkörper 26 wird so tief zwischen die Spreizelemente 12 eingezogen, bis er an der Grundplatte 16 anliegt. Durch die Anlage des Spreizkörpers 26 ergibt sich ein sprungartiger Drehmomentanstieg, so dass die vollständige Aufspreizung der Spreizelemente 12 deutlich merkbar ist. Auch ermöglicht die Anlage des Spreizkörpers 26 an der Grundplatte 16 ein starkes Festziehen der Spreizschraube 32, ohne dass mit einem Ausreißen oder Beschädigen irgendwelcher Teile gerechnet werden muss. Dadurch eignet sich der erfindungsgemäße Spreizanker 10 auch zum Aufspreizen mit einem Elektro- oder Druckluftschrauber.

Beim Einziehen zwischen die Spreizelemente 12 gelangt der Spreizkörper 26 mit einer der Grundplatte 16 abgewandten Stimfläche 35 in Eingriff mit den sägezahnförmigen Rastelementen 24, an den Längsseitenrändem 22 der Spreizelemente 12, der Spreizkörper 26 verrastet an den Spreizelementen 12. Die Rastelemente 24 bilden eine Rasteinrichtung, die den Spreizkörper 26 in der zwischen die Spreizelemente 12 eingezogenen Stellung hält. Der Spreizkörper 26 seinerseits hält in der verrastelen, zwischen die Spreizelemente 12 eingezogenen Stellung die Spreizelemente 12 aufgespreizt. Dadurch ist es möglich, die Spreizschraube 32 nach dem Aufspreßzen und Verankern des Spreizankers 10 auszudrehen, ohne dass der Spreizkörper 26 seine zwischen die Spreizelemente 12 eingezogene Stellung vertassen kann. Der Spreizanker 10 bleibt auch bei ausgedrehter Spreizschraube 32 an der Gipskartonplatte 34 verankert. Es kann nun ein zu befestigender Gegenstand, beispielsweise eine Holzlatte 36 auf die Gipskartonplatte 34 aufgesetzt und durch Durchstecken der Spreizschraube 32 durch ein Bohrloch in der Holzlatte 36 und Eindrehen der Spreizschraube 32 in den Spreizkörper 26 des Spreizankers 10 an der Gipskartonplatte 34 befestigt werden.

## Patentansprüche

1. Spreizanker zur Befestigung an einer Baustoffplatte, wobei der Spreizanker (10) flächenförmige Spreizelemente (12) aufweist, die in etwa rechtwinklig zur gleichen Seite von einer Grundplatte (16) des Spreizankers (10) abstehen, wobei die Grundplatte (16) ein Loch (20) zum Durchstecken einer Spreizschraube (32) aufweist und wobei die Spreizelemente (12) einstückig mit der Grundplatte (16) durch Trennen und Umformen aus Blech hergestellt sind, **dadurch gekennzeichnet, dass** der Spreizanker (10) einen Spreizkörper (26) aufweist, mit dem durch Einziehen des Spreizkörpers (26) zwischen die Spreizelemente (12) die Spreizelemente (12) aufspreizbar sind und dass der Spreizanker (10) eine Rasteinrichtung aufweist, die den Spreizkörper (26) in einer zwischen die Spreizelemente (12) eingezogenen Stellung verrastet am Spreizanker (10) hält.

2. Spreizanker nach Anspruch 1, **dadurch gekennzeichnet, dass** die Rasteinrichtung an den Spreizelementen (12) ausgebildete Rastelemente (24) aufweist, mit denen der Spreizkörper (26) in der zwischen die Spreizelemente (12) eingezogenen Stellung verrastet.

3. Spreizanker nach Anspruch 2, **dadurch gekennzeichnet, dass** die Rastelemente (24) durch Ausstanzungen an den Spreizelementen (12) gebildet sind.

4. Spreizanker nach Anspruch 1, **dadurch gekennzeichnet, dass** die Spreizelemente (12) eine Krümmung in einer Umfangsrichtung des Spreizankers (10) aufweisen.

5. Spreizanker nach Anspruch 1, **dadurch gekennzeichnet, dass** die Spreizelemente (12) eine Längsprofilierung aufweisen.

6. Spreizanker nach Anspruch 5, **dadurch gekennzeichnet, dass** die Längsprofilierung als Wellung ausgeführt ist.

7. Spreizanker nach Anspruch 1, **dadurch gekennzeichnet, dass** die Grundplatte (16) zumindest stellenweise seitlich über die Spreizelemente (12) vorsteht.

8. Spreizanker nach Anspruch 1, **dadurch gekennzeichnet, dass** der Spreizkörper (26) einen Spreizkonus (28) und einen zylindrischen Abschnitt (30) an seiner der Grundplatte (16) zugewandten Stirnseite aufweist.

## Claims

1. Expansible anchor for fastening to a building material panel, the expansible anchor (10) having planar expansion elements (12) which project approximately at right angles to the same side of a base plate (16) of the expansible anchor (10), the base plate (16) having a hole (20) for an expansion screw (32) to pass through and the expansion elements (12) being produced integrally with the base plate (16) from sheet metal by separating and re-shaping, **characterised in that** the expansion anchor (10) has an expansion body (26) by means of which the expansion elements (12) can be expanded as a result of drawing the expansion body (26) in between the expansion elements (12), and **in that** the expansion anchor (10) has a locking device which holds the expansion body (26) locked to the expansion anchor (10) in a position drawn in between the expansion elements (12).

2. Expansible anchor according to claim 1, **characterised in that** the locking device has locking elements (24) formed on the expansion elements (12), by means of which locking elements the expansion body (26) locks in the position drawn in between the expansion elements (12).

3. Expansible anchor according to claim 2, **characterised in that** the locking elements (24) are formed by punched-out regions on the expansion elements (12).

4. Expansible anchor according to claim 1, **characterised in that** the expansion elements (12) are curved in the circumferential direction of the expansible anchor (10).

5. Expansible anchor according to claim 1, **characterised in that** the expansion elements (12) have longitudinal profiling.

6. Expansible anchor according to claim 5, **characterised in that** the longitudinal profiling is of corrugated form.

7. Expansible anchor according to claim 1, **characterised in that** the base plate (16) projects laterally beyond the expansion elements (12) at least in places.

8. Expansible anchor according to claim 1, **characterised in that** the expansion body (26) comprises an expansion cone (28) and, at its end facing the base plate (16), a cylindrical region (30).

## Revendications

1. Elément d'ancrage à expansion destiné à être fixé à une plaque de matériau de construction, l'élément d'ancrage à expansion (10) comprenant des éléments à expansion plats (12), qui sont éloignés d'une plaque de base (16) de l'élément d'ancrage à expansion (10) approximativement perpendiculairement au même côté, la plaque de base (16) comprenant un trou (20) destiné à y faire passer une vis d'expansion (32) et les éléments à expansion (12) étant fabriqués en tôle et en un seul tenant avec la plaque de base (16) par séparation et déformation, **caractérisé en ce que** l'élément d'ancrage à expansion (10) comprend un corps à expansion (26), avec lequel, en vissant le corps à expansion (26) entre les éléments à expansion (12), les éléments à expansion (12) peuvent être écartés et **en ce que** l'élément d'ancrage à expansion (10) comprend un système d'enclenchement qui maintient le corps à expansion (26) sur l'élément d'ancrage à expansion (10) de façon verrouillée dans une position insérée entre les éléments à expansion (12).

2. Elément d'ancrage à expansion selon la revendication 1, **caractérisé en ce que** le système d'enclenchement comprend des éléments d'enclenchement (24) formés sur les éléments à expansion (12), éléments d'enclenchement avec lesquels le corps à expansion (26) s'enclenche dans la position insérée entre les éléments à expansion (12).

3. Elément d'ancrage à expansion selon la revendication 2, **caractérisé en ce que** les éléments d'enclenchement (24) sont formés par des matriçages sur les éléments à expansion (12).

4. Elément d'ancrage à expansion selon la revendication 1, **caractérisé en ce que** les éléments à expansion (12) présentent une courbure dans une direction périphérique de l'élément d'ancrage à expansion (10).

5. Elément d'ancrage à expansion selon la revendication 1, **caractérisé en ce que** les éléments à expansion (12) présentent un profilage longitudinal.

6. Elément d'ancrage à expansion selon la revendication 5, **caractérisé en ce que** le profilage longitudinal est conçu comme une ondulation.

7. Elément d'ancrage à expansion selon la revendication 1, **caractérisé en ce que** la plaque de base (16) dépasse au moins par endroits latéralement des éléments à expansion (12).

8. Elément d'ancrage à expansion selon la revendication 1, **caractérisé en ce que** le corps à expansion (26) comprend un cône à expansion (28) et une section cylindrique (30) sur son côté frontal tourné vers la plaque de base (16).
